# EUROPÄISCHE PATENTSCHRIFT

(11) **EP 2 089 437 B1**
(45) Veröffentlichungstag und Bekanntmachung des Hinweises auf die Patenterteilung: **03.09.2014**
(21) Anmeldenummer: 07857220.3
(22) Anmeldetag: 15.11.2007
(51) Int. Cl.: C08F 2/24

(54) **VERFAHREN ZUR HERSTELLUNG VON DISPERSIONEN UND DEREN VERWENDUNG**
METHOD FOR PRODUCING DISPERSIONS AND USE THEREOF
PROCÉDÉ POUR PRODUIRE DES DISPERSIONS ET LEUR UTILISATION

(30) Priorität: 17.11.2006 EP 06023903
(43) Veröffentlichungstag der Anmeldung: 19.08.2009
(73) Patentinhaber: Akzo Nobel N.V., 6824 BM Arnhem (NL)
(72) Erfinder: WILLIMANN, Hongli, 6340 Baar (CH); WOLFISBERG, Jakob, 6006 Luzern (CH); KEHRER, Ulf, 65795 Hattersheim (DE)
(74) Vertreter: Akzo Nobel IP Department
(86) Internationale Anmeldenummer: PCT/EP2007/062423
(87) Internationale Veröffentlichungsnummer: WO 2008/059034

(56) Entgegenhaltungen:
- WO-A-97/32904
- WO-A-98/49205

## Beschreibung

Die vorliegende Erfindung betrifft ein Verfahren zur Herstellung von wässrigen Dispersionen, welche mit einem in Wasser unlöslichen Stabilisierungskolloid stabilisiert sind, und daraus erhältlichen in Wasser redispergierbaren Polymer-Pulvern sowie deren Verwendung.

Wässrige Dispersionen werden, insbesondere wenn sie anschliessend zu in Wasser redispergierbaren Polymer-Pulvern verarbeitet werden, oft mittels Schutzkolloiden stabilisiert. Solche Schutzkolloide sind in aller Regel wasserlöslich und oft auch nonionisch. Typische Vertreter solcher Schutzkolloide sind teilhydrolysierte Polyvinylalkohole. Allerdings haben sie oft den Nachteil, dass sie die Wasserfestigkeit des aus der Dispersion oder Redispersion hergestellten Polymerfilms negativ beeinflussen. Aus diesem Grund gab es schon verschiedene Vorschläge für Alternativen.

Die EP 1'098'916 A1 und die EP 1'109'838 A1 beschreiben beispielsweise ein in Wasser unlösliches Stabilisierungskolloid, welches mittels kationischen Monomeren hergestellt wird und eine nachfolgend hergestellte wässrige Dispersion stabilisiert. In dieser Weise hergestellte wässrige Dispersionen lassen sich auf einfache Art in Dispersionspulver überführen. Da diese Produkte oft in Formulierungen verwendet werden, in welchen auch anionische Verbindungen eingesetzt werden, kann dies in einzelnen Fällen zu ungewünschten Interaktionen zwischen dem kationischen Latex und der anionischen Verbindung führen. Dies ist bei anionischen Stabilisierungssystemen weniger der Fall. Allerdings neigen Dispersionen, welche schon einen geringen Anteil an Carboxylgruppen im Stabilisierungssystem aufweisen, insbesondere in Systemen, die reich an Calcium-Ionen sind, wie beispielsweise zementäre Mörtel, zur Calcium-Komplexierung, was einen sehr starken, unerwünschten Viskositätsanstieg zur Folge hat. Deshalb gab es einige Ansätze bei denen Monomere mit Sulfonatgruppen und/ oder Sulfonsäuregruppen copolymerisiert wurden.

So beschreiben die EP 725 092 A2 und DE 195 06 331 A1 redispergierbare, pulverförmige Kern-Mantel-Polymere bestehend aus einem Kernpolymerisat aus 80 bis 100 Gew.-% an Monomeren aus der Gruppe der Acrylate und 0 bis 20 Gew.-% an ethylenisch ungesättigten Sulfonsäureverbindungen und einem Mantelpolymerisat aus 60 bis 95 Gew.-% an Monomeren aus der Gruppe der Acrylate und 5 bis 40 Gew.-% an ethylenisch ungesättigten Sulfonsäureverbindungen. Die Herstellung erfolgt über eine klassische Kern-Schale-Emulsionspolymerisation, bei welcher zunächst das KernPolymer und anschliessend das Mantel-Polymer hergestellt wird und die Monomere über eine mittels Emulgatoren stabilisierte Voremulsion zudosiert werden. Die Glasübergangstemperaturen Tg werden bevorzugt so eingestellt, dass diese beim Kernpolymerisat etwa -65 bis +30°C beträgt, und beim Mantelpolymerisat soll sie über +60°C liegen. Die ethylenisch ungesättigten Sulfonsäureverbindungen werden den mit den anderen Monomeren der jeweiligen Monomerphase zusammengemischt und so in der Regel in protonierter Form zudosiert. Da diese Dispersion mittels Emulgatoren stabilisiert sind, besteht die Gefahr einer reduzierten Redispersion oder - falls die Glasübergangstemperatur des Mantelpolymers entsprechend hoch eingestellt wird - zu einer schlechten Filmbildung nach der Redispersion.

Die WO 98/49205 A1 beschreibt ein Verfahren zur Herstellung von Schutzkolloidstabilisierten wässrigen Polymerdispersionen, wobei die Polymerisation in Gegenwart eines typischerweise wasserlöslichen Schutzkolloides durchgeführt wird, enthaltend 5 bis 95 Gew.-% Sulfonsäure- oder Sulfonatgruppen-haltige Monomereinheiten, 5 bis 95 Gew.-% nicht vernetzbare, wasserlösliche Monomereinheiten, und 0 bis 5 Gew.-% hydrophober, wasserunlöslicher Monomereinheiten. In der WO 97/32904 A1 werden wasserlösliche, vernetzbare Schutzkolloide beschrieben, enthaltend 20 bis 95 Gew.-% Sulfonsäure- oder Sulfonatgruppen-haltige Monomereinheiten, 4 bis 80 Gew.-% N-Methylol- oder N-Alkoxymethylgruppen-haltige Monomereinheiten, und 0.1 bis 20 Gew.-% hydrophobe Monomereinheiten aus der Gruppe der wasserunlöslichen Monomeren und der hydrophoben Endgruppen von Initiatorresten oder Reglermolekülen. In beiden Fällen wird das wasserlösliche Schutzkolloid in Anwesenheit von Aceton hergestellt, welches nach der Reaktion abdestilliert wird. Um das erhaltene Polymerisat von zurückbleibenden Acetonresten ganz zu befreien, muss jedoch ein erheblicher Aufwand betrieben werden. Zudem beruht ein wesentlicher Anteil der eingesetzten Monomere auf (Meth-)acrylamiden, welche im alkalischen pH Bereich leicht Amine und/ oder Ammoniak abspalten können, was unerwünschte Effekte in der Endanwendung zur Folge hat. Des Weiteren besteht die Möglichkeit, dass das so hergestellte Schutzkolloid eine mangelnde Stabilisierungswirkung der nachfolgend hergestellten Dispersion haben kann, was sich insbesondere in einer mangelnden Lagerstabilität und Redispersion des getrockneten, in Wasser redispergierbaren Dispersionspulvers auswirkt.

Es stellt sich somit die Aufgabe, ein Stabilisierungssystem für wässrige Dispersionen bereitzustellen, welches die Nachteile des Standes der Technik weitgehend verhindert. Insbesondere sollen die damit stabilisierten Dispersionen und in Wasser redispergierbaren Polymer-Pulver eine gute Kompatibilität mit anderen Rohstoffen aufweisen. Des Weiteren soll es möglich sein, mittels einer flexiblen Herstellweise einfach eine Kern-Schale-Morphologie zu erreichen sowie die in der jeweiligen Matrix zu erzielenden Eigenschaften einfach zu steuern. Zudem sollen die erhaltenen Dispersionen und Polymer-Pulver vielfältig einsetzbar sein.

Überraschenderweise wurde gefunden, dass diese Aufgabe mit einem Verfahren zur Herstellung von wässrigen Dispersionen, welche einfach in in Wasser redispergierbare Polymer-Pulver überführt werden können, gelöst werden kann, wobei die wässrigen Dispersionen mit einem in Wasser unlöslichen Stabilisierungskolloid stabilisiert sind, wobei
a) in einem ersten Schritt ein in Wasser unlösliches Stabilisierungskolloid hergestellt wird, wobei dieses, bezogen auf die zur Herstellung des Stabilisierungskolloids eingesetzten Monomermenge, mittels radikalischer Polymerisation von
   a1) etwa 1 bis 90 Gew.-% von mindestens einem olefinisch ungesättigten Monomer, enthaltend mindestens eine Sulfat- und/ oder Sulfonatgruppe, die gegebenenfalls protoniert sein kann,
   a2) etwa 5 bis 99 Gew.-% von mindestens einem olefinisch ungesättigten Monomer mit einer Wasserlöslichkeit bei 20°C von weniger als 50 g/l, und
   a3) bis 50 Gew.-% von mindestens einem olefinisch ungesättigten Monomer mit einer Wasserlöslichkeit bei 20°C von mehr als 50 g/l, in Wasser hergestellt wird, gefolgt von
b) der Zugabe von mindestens einem weiteren olefinisch ungesättigten Monomer und mindestens einem Initiator, wobei durch radikalische Polymerisation des weiteren olefinisch ungesättigten Monomers eine wässrige Dispersion erhalten wird, an welcher
c) gegebenenfalls eine Restmonomerreduktion durchgeführt wird, wobei diese durch Polymerisation von Restmonomeren und/ oder durch physikalische Entfernung der Restmonomeren und gegebenenfalls weiterer flüchtiger organischer Komponenten mittels Einleiten von Dampf und/ oder Gas ausgeführt wird.

Zur Herstellung des in Wasser unlöslichen Stabilisierungskolloids werden, bezogen auf die zur Herstellung des Stabilisierungskolloids eingesetzte Monomermenge, bevorzugt etwa 3 bis 50 Gew.-%, insbesondere etwa 5 bis 30 Gew.-%, von mindestens einem unter a1) genannten olefinisch ungesättigten Monomer, enthaltend mindestens eine Sulfat- und/ oder Sulfonatgruppe, die gegebenenfalls protoniert sein kann, eingesetzt. Zudem werden bevorzugt etwa 20 bis 97 Gew.-%, insbesondere etwa 50 bis 95 Gew.-%, von mindestens einem unter a2) genannten olefinisch ungesättigten Monomer mit einer Wasserlöslichkeit bei 20°C von weniger als 50 g/l, und bevorzugt bis etwa 30 Gew.-%, insbesondere bis etwa 20 Gew.-%, von mindestens einem unter a3) genannten olefinisch ungesättigten Monomer mit einer Wasserlöslichkeit bei 20°C von mehr als 50 g/l, mittels radikalischer Polymerisation in Wasser umgesetzt. Die unter a3) genannten olefinisch ungesättigten Monomere können, müssen jedoch nicht eingesetzt werden.

Geeignete Monomereinheiten der Gruppe a1) sind olefinisch ungesättigte Monomere, enthaltend mindestens eine Sulfat- und/ oder Sulfonatgruppe, die gegebenenfalls protoniert sein kann. Nicht limitierende Beispiele sind 2-Acrylamido-2-methylpropansulfonsäure (AMPS), Styrolsulfonsäure, (Meth-)Acrylsäure-Sulfoalkylester, Itaconsäure-Sulfoalkylester, vorzugsweise jeweils als C₁- bis C₆- Alkylester, Vinylsulfonsäure und deren Alkali-, Erdalkali- und/ oder Ammoniumsalze. Bevorzugt sind Monomere enthaltend eine (Meth)acrylat-, eine (Meth)acrylamid- und/ oder eine Vinyl-Gruppe, insbesondere 2-Acrylamido-2-methylpropansulfonsäure (AMPS), Styrolsulfonsäure, Acrylsäuresulfopropylester, Itaconsäuresulfopropylester, Vinylsulfonsäure sowie der jeweiligen Ammonium-, Natrium-, Kalium- und/ oder Calciumsalze.

Geeignete Monomereinheiten der Gruppe a2) sind olefinisch ungesättigte Monomere mit einer Wasserlöslichkeit bei 20°C von weniger als 50 g/l. Bevorzugt werden lineare oder verzweigte Ca- bis C₂₀- Vinylester, Ethylen, Propylen, Vinylchlorid, (Meth-) Acrylsäure und deren lineare oder verzweigte C₁- bis C₂₀- Alkylester, Styrol, Styrol-Derivate und/ oder Diene, wie beispielsweise 1,3-Butadien. Ganz besonders bevorzugte Vinylester sind lineare oder verzweigte C₁- bis C₁₂- Vinylester, wie beispielsweise Vinylacetat, Vinylpropionat, Vinyllaurat, Vinyl-2-ethylhexanoat und/ oder C₉-, C₁₀- und/ oder C₁₁- Vinylversatat. Ganz besonders bevorzugte (Meth-) Acrylsäureester sind Methylmethacrylat, n-Butylacrylat, t-Butylmethacrylat, isoButylmethacrylat und 2-Ethylhexylmethacrylat.

Geeignete Monomereinheiten der Gruppe a3) sind olefinisch ungesättigte Monomere mit einer Wasserlöslichkeit bei 20°C von mehr als 50 g/l. Bevorzugt werden Monomere mit Amid-, Amin- und/ oder Hydroxyl-Gruppen. Besonders bevorzugt werden Hydroxyalkyl(meth-)acrylate, wie Hydroxyethylacrylat, Hydroxypropylacrylat und/ oder Hydroxybutylacrylat, Acrylamid, Methacrylamid und/ oder (Meth-)Acrylsäureester und N-substituierte (Meth-)Acrylamide enthaltend Polyalkylenoxid- und/ oder Polyalkylenglykolgruppen

Zudem ist es auch möglich, dass bei der Herstellung des in Wasser unlöslichen Stabilisierungskolloids mindestens ein olefinisch ungesättigtes Monomer mit einer weiteren reaktiven Gruppe copolymerisiert wird. Bevorzugte reaktive Gruppen solcher Monomere sind Epoxy-, Epihalohydrin-, Amin-, Ammonium-, Hydroxyl-, Aldehyd-, Keton-, Säureanhydrid-, Acetoacetonat-, Carboxyl-, Thiol-, Alkoxysilan-, Silanol-, Glycidyl-, N-Methylol-, Sulfonsäure-, Amid-, Amidin-, Imin-, Ester- und/ oder Carbonylgruppen, wobei Alkoxysilan-, Epoxy-, Epihalohydrin- und/ oder Amingruppen ganz besonders bevorzugt sind. In einer speziellen Ausführungsform ist die weitere reaktive Gruppe ebenfalls olefinisch ungesättigt und kann mit weiteren olefinisch ungesättigten Monomeren mittels radikalischer Polymerisation reagieren. Bei solchen Monomeren ist es bevorzugt, wenn die weitere reaktive Gruppe eine geringere Reaktivität aufweist als die erste reaktive Gruppe. Beispiele solcher Monomere sind Divinyladipat, Diallylmaleat, Allylmethacrylat oder Triallylcyanurat, Divinylbenzol, Butandiol-1,4-dimethacrylat, Triethylenglykoldimethacrylat und Hexandioldiacrylat.

Der Gewichtsanteil der Monomeren mit reaktiven Gruppen beträgt, bezogen auf die zur Herstellung des Stabilisierungskolloid verwendete Gesamtmenge an Monomeren, etwa 0.01 bis 50 Gew.-%, bevorzugt etwa 0.1 bis 30 Gew.-%, insbesondere etwa 0.5 bis 20 Gew.-%. Die Wasserlöslichkeit dieser Monomere ist unwesentlich und sie kann bei 20°C mehr oder weniger als 50 g/l betragen.

Bevorzugte olefinisch ungesättigte Monomere mit einer weiteren reaktiven Gruppe sind Triethylenglykoldimethacrylat, Hexandioldiacrylat, funktionelle Vinyl- und/ oder (Meth-)Acrylat Monomere enthaltend Alkoxysilan-, Glycidyl-, Epihalohydrin-, Carboxyl-, Amin-, Hydroxyl-, Ammoniumgruppen, Hydroxypropyl(meth-)acrylat, N-Methylolallyl-carbamat, Methylacrylamidoglykolsäuremethylester, N-Methylol(meth-)acrylamid, Acrylamidoglykolsäure, Glycidyl(meth-)acrylat, (Meth-)acryloxypropyltrialkoxysilan, Vinyltrialkoxysilan, Vinylmethyldialkoxysilan, wobei als Alkoxygruppen bevorzugt Methoxy-, Ethoxy-und/ oder iso-Propoxygruppen verwendet werden, Acetylacetoxyethyl(meth-) acrylat, Diacetonacrylamid, Methylacrylamidoglykolsäure und deren Alkylester, N-Methylol-(meth-)acrylamid, N-Methylolallylcarbamat, Ester des N-Methylol(meth-) acrylamids und des N-Methylolallylcarbamats, N-[3-(Dimethylamino)propyl] methacrylamid, N-[3-(Dimethylamino)ethyl]methacrylat, N-[3-(Trimethylammonium) propyl]methacrylamid-chlorid und/ oder N,N-[3-Chloro-2-hydroxypropyl)-3-dimethyl-ammonium-propyl](meth-)acrylamid-chlorid, wobei insbesondere bei kationischen Monomeren die Menge so ausgewählt wird, dass keine negative Interaktion mit den anionischen Monomeren wie beispielsweise Koagulation stattfindet.

Das in einem ersten Schritt gebildete in Wasser unlösliche Stabilisierungskolloid dient während und nach der Zugabe von mindestens einem weiteren olefinisch ungesättigten Monomer und mindestens einem Initiator zur Stabilisierung der wässrigen Dispersion, welche durch radikalische Polymerisation in Wasser der weiteren olefinisch ungesättigten Monomere gebildet wird. Je nach Zusammensetzung und Partikelgrösse des in Wasser unlöslichen Stabilisierungskolloids führt die Zugabe der weiteren olefinisch ungesättigten Monomere zu einer radikalischen Emulsions-, Suspensions- und/ oder Mikroemulsions-Polymerisation. Diese kann in einem kontinuierlichen, einem Monomerzulauf- und/ oder einem Batchverfahren durchgeführt werden, wobei die Monomere im Monomerzulaufverfahren auch in Form einer Voremulsion zudosiert werden können. Auf diese Weise können sowohl Homo- wie auch Copolymerisate stabilisiert werden.

Es ist bevorzugt, wenn diese weiteren Monomere eine Wasserlöslichkeit bei 20°C von weniger als 50 g/l besitzen. Gegebenenfalls ist es jedoch auch möglich, dass ein geringer Anteil an Monomeren eine höhere Wasserlöslichkeit aufweist.

Geeignete Monomere und Monomerklassen zur Herstellung dieser Homo- wie auch Copolymerisate sind zum Beispiel lineare oder verzweigte C₁- bis C₂₀- Vinylester, Ethylen, Propylen, Vinylchlorid, (Meth-)Acrylsäure und deren lineare oder verzweigte C₁- bis C₂₀- Alkylester, (Meth-)Acrylamid und (Meth-)Acrylamid mit N-substituierten linearen oder verzweigten C₁- bis C₂₀- Alkylgruppen, Acrylnitril, Styrol, Styrol-Derivate, wie alpha-Methylstyrol, ortho-Chlorstyrol oder Vinyltoluol und/ oder Diene, wie beispielsweise 1,3-Butadien und Isopren. Bevorzugte Vinylester sind lineare oder verzweigte C₁- bis C₁₂- Vinylester, wie beispielsweise Vinylacetat, Vinylstearat, Vinylformiat, Vinylpropionat, Vinylbutyrat, Vinylpivalat, Vinyllaurat, Vinyl-2-Ethylhexanoat, 1-Methylvinylacetat und/ oder C₉-, C₁₀- und/ oder C₁₁- Vinylversatat, Vinylpyrrolidon, N-Vinylformamid, N-Vinylacetamid sowie Vinylester der Benzoesäure und p-tert-Butylbenzoesäure, wobei insbesondere Vinylacetat, Vinyllaurat und/ oder Vinylversatat bevorzugt sind. Bevorzugte C₁- bis C₁₂- Alkylgruppen der (Meth-) Acrylsäureester und N-substituierten (Meth-)Acrylamide sind Methyl-, Ethyl-, Propyl-, n-Butyl-, i-Butyl-, t-Butyl-, Hexyl-, Cyclohexyl-, 2-Ethylhexyl-, Lauryl-, Stearyl-, Norbornyl-, Polyalkylenoxid- und/ oder Polyalkylenglykolgruppen, insbesondere Methyl-, Butyl-, 2-Ethylhexylgruppen. Insbesondere sind Methylmethacrylat, n-Butylacrylat, t-Butylmethacrylat und 2-Ethylhexylmethacrylat bevorzugt.

Zudem können weitere Monomere, insbesondere Monomere mit funktionellen Gruppen einpolymerisiert werden. Beispielsweise können Maleinsäureanhydrid, ungesättigte Dicarbonsäuren und deren verzweigte oder lineare C₁- bis C₂₀- Ester, insbesondere Itaconsäure, Maleinsäure und/ oder Fumarsäure sowie deren Ester, mehrfach ethylenisch ungesättigte Comonomere, wie beispielsweise Divinyladipat, Diallylmaleat, Allylmethacrylat oder Triallylcyanurat, Divinylbenzol, Butandiol-1,4-dimethacrylat, Triethylenglykoldimethacrylat, Hexandioldiacrylat, funktionelle Vinyl- und/ oder (Meth-) Acrylat Monomere enthaltend Alkoxysilan-, Glycidyl-, Epihalohydrin-, Carboxyl-, Amin-, Hydroxyl-, Ammonium- und/ oder Sulfonsäuregruppen copolymerisiert werden. Bevorzugte funktionelle Monomere sind Hydroxypropyl(meth-)acrylat, N-Methylolallyl-carbamat, Methylacrylamidoglykolsäuremethylester, N-Methylol(meth-)acrylamid, Vinylsulfonsäure, Acrylamidoglykolsäure, Glycidyl(meth-)acrylat, 2-Acrylamido-2-methyl-propansulfonsäure, (Meth-)acryloxypropyltri(alkoxy)silan, Vinyltrialkoxysilan, Vinylmethyldialkoxysilan, wobei als Alkoxygruppen bevorzugt Methoxy-, Ethoxy- und/ oder iso-Propoxygruppen verwendet werden, Acetylacetoxyethyl(meth-)acrylat, Diacetonacrylamid, Acrylamidoglycolsäure, Methylacrylamidoglykolsäuremethylester, Alkylether, N-Methylol(meth-)acrylamid, N-Methylolallylcarbamat, Ester des N-Methylol(meth-) acrylamids und des N-Methylolallylcarbamats, N-[3-(Dimethylamino)propyl]meth-acrylamid, N-[3-(Dimethylamino)ethyl]methacrylat. Der Anteil dieser Comonomere beträgt, bezogen auf den Gesamtmonomeranteil, bevorzugt etwa 0 bis 30 Gew.-%, insbesondere etwa 0 bis 20 Gew.-% und ganz besonders bevorzugt etwa 0,1 bis 10 Gew.-%, wobei insbesondere darauf geachtet werden sollte, dass der Anteil an freien Carboxylgruppen bevorzugt nicht höher als etwa 10 Gew.-%, insbesondere nicht höher als etwa 5 Gew.-% und ganz besonders bevorzugt nicht höher als etwa 3 Gew.-% ist.

Auf diese Weise können wässrige Dispersionen hergestellt werden, die bevorzugt Polymerisate oder Copolymerisate auf Basis von Vinylacetat, Ethylen-Vinylacetat, Ethylen-Vinylacetat-Vinylversatat, Ethylen-Vinylacetat-Vinylchlorid, Ethylen-Vinylchlorid, Vinylacetat-Vinylversatat, Ethylen-Vinylacetat-(Meth-)Acrylat, Vinylacetat-Vinylversatat-(Meth-)Acrylat, (Meth-)Acrylat, Vinylacetat-Maleinsäure und Vinylacetat-Maleinsäureester, Vinylacetat-Vinylversatat-Maleinsäure und Vinylacetat-Vinylversatat-Maleinsäureester, Vinylacetat-(Meth-)Acrylat-Maleinsäure und Vinylacetat-(Meth-)Acrylat-Maleinsäureester, Styrol-Acrylat und/ oder Styrol-Butadien enthalten, wobei Vinylversatat ein C₄- bis C₁₂- Vinylester ist.

Die Wahl bezüglich des zur Polymerisation notwendigen Initiatorsystems unterliegt sowohl für die Herstellung des in Wasser unlöslichen Stabilisierungskolloids wie auch zur Herstellung der wässrigen Dispersion keinerlei wesentlichen Einschränkungen. So können alle in den erwähnten Polymerisationsarten bekannten Initiatorsysteme verwendet werden. Bevorzugt werden jedoch Initiatoren eingesetzt, welche unter den Reaktionsbedingungen Radikale bilden. Dazu gehören thermische Initiatorsysteme, wie Persulfate, beispielsweise Kalium-, Natrium- oder Ammoniumpersulfat, wasser- und monomerlösliche Azoinitiatoren, wie Azobisisobutyronitril, Azobiscyanovaleriansäure sowie 2,2'-Azobis(2-methylpropion-amidin)dihydrochlorid, Redox-Initiatorsysteme bestehend aus Oxidationsmitteln, wie beispielsweise Wasserstoffperoxid, t-Butylhydroperoxid, t-Butylperoxid, Isopropylbenzolmonohydroperoxid, Cumolhydroperoxid, t-Butylperoxopivalat, Dibenzoylperoxid, Bicyclohexylperoxydicarbonat und Dicetylperoxydicarbonat, und Reduktionsmittel, wie beispielsweise Natrium-, Kalium-, Ammonium- Sulfit- und Bisulfit-, Natrium-, Kalium- und Zinkformaldehydsulfoxylat sowie Ascorbinsäure, wobei gegebenenfalls auch Oxidationsmittel alleine verwendet werden können, welche mittels thermischer Zersetzung freie Radikale bilden können sowie katalytische Initiatorsysteme, wie beispielsweise das System H₂O₂/ Fe⁺²/ H⁺. Der Anteil an Initiatoren, bezogen auf den Monomeranteil, liegt bevorzugt zwischen etwa 0.01 und 5 Gew.-%, insbesondere zwischen etwa 0.1 und 3 Gew.-%.

Es ist bevorzugt, wenn bei der Herstellung des in Wasser unlöslichen Stabilisierungskolloids, wie auch der damit stabilisierten Dispersionen keine Emulgatoren, oder diese in einer Menge von weniger als etwa 3 Gew.-%, bevorzugt von weniger als etwa 2 Gew.-%, insbesondere von weniger als etwa 1 Gew.-% Emulgatoren, bezogen auf den Monomeranteil des in Wasser redispergierbaren Dispersionspulvers, eingesetzt werden.

Geeignete Emulgatoren, werden welche eingesetzt, können nichtionische, anionische, kationische und/ oder amphoterer Natur sein, wobei insbesondere kationische Emulgatoren weniger bevorzugt sind. Beispielsweise können Alkylsulfonate, Alkylarylsulfonate, Alkylsulfate, Sulfate von Hydroxylalkanolen, Alkyl- und Alkylaryldisulfonate, sulfonierte Fettsäuren, Sulfate und Phosphate von polyethoxylierten Alkanolen und Alkylphenolen sowie Ester von Sulfobernsteinsäure, Polyadditionsprodukte, wie Polyalkoxylate, beispielsweise Addukte von 5 bis 50 Mol Ethylenoxid und/ oder Propylenoxid pro Mol an lineare und/ oder verzweigte C₆- bis C₂₂-Alkanole, Alkylphenole, Fettsäuren, Fettsäureamine, primäre und/ oder sekundäre Alkyl-Amine eingesetzt werden, wobei die Alkylgruppe jeweils bevorzugt eine lineare und/ oder verzweigte C₆- bis C₂₂-Alkylgruppe ist.

Bei der Polymerisation des in Wasser unlöslichen Stabilisierungskolloids und/ oder der wässrigen Dispersion können Kettenregler eingesetzt werden, um die Produkteigenschaften optimal einzustellen. In der Regel ist es bevorzugt, wenn diese schon bei der Synthese des Stabilisierungskolloids zugegeben werden. Die optimale Einsatzmenge wird neben dem zu erzielenden Molekulargewicht vor allem aufgrund des oder der eingesetzten Kettenreglers bestimmt und beträgt etwa 0.01 bis 5 Gew.-%, insbesondere etwa 0.05 bis 2.5 Gew.-%, bezogen auf Monomere des Stabilisierungskolloids, respektive auf das weitere Monomer, welches zur Ausbildung der wässrigen Dispersion zugegeben wird. Geeignete Kettenregler können einzeln oder in Kombination eingesetzt werden und sind Methanol, Ethanol, Propanol und Butanol, Ketone mit 2 bis 8 Kohlenstoffatomen, wie beispielsweise Aceton, Methylethylketon, Cyclohexan, Acetaldehyd, Propionaldehyd, n-Butylaldehyd, Benzaldehyd und Merkaptane, wie Dodecylmercaptan, Laurylmercaptan, Thioglycolsäure, Octylthioglycolat und Thioglycerol. Bevorzugte Kettenregler sind Merkaptane, wie Dodecylmercaptan und Laurylmercaptan. Des Weiteren ist es auch möglich, das Molekulargewicht der jeweiligen Polymerphase mittels anderer Parameter einzustellen, wie anhand der Initiator-Konzentration und/ oder der Reaktionsbedingungen, wie Temperatur und/ oder Monomer-Dosiergeschwindigkeit.

Das in Wasser unlösliche Stabilisierungskolloid wie auch die nachfolgend hergestellte wässrige Dispersion unterliegen bezüglich den Verfahrensparametern keinen wesentlichen Einschränkungen. So kann die Temperatur zwischen etwa 20 und 110°C, bevorzugt zwischen etwa 50 bis 100°C, insbesondere zwischen etwa 60 und 95°C, liegen. Die jeweiligen Reaktionsdrücke sind im Wesentlichen von den zu polymerisierenden Monomeren abhängig. Sind diese bei Reaktionstemperatur flüssig, genügt in der Regel leichtes Vakuum oder Normaldruck. Werden gasförmige Monomere, wie beispielsweise Ethylen, copolymerisiert können sie bis 100 Bar oder mehr betragen.

Die Herstellung der Dispersion erfolgt in der Regel als 2- oder Mehrstufen-Polymerisation, wobei die erste Stufe die Herstellung des in Wasser unlöslichen Stabilisierungskolloids ist. Durch geeignete Prozesssteuerung und entsprechende Wahl der nachfolgend zudosierten Monomere kann die Heterogenität der wässrigen Dispersion beliebig eingestellt werden.

Der Anteil des in der ersten Stufe hergestellten in Wasser unlöslichen Stabilisierungskolloids beträgt, bezogen auf den Feststoffgehalt der erhaltenden Dispersion, in der Regel etwa 2 bis 50 Gew.-%, bevorzugt etwa 5 bis 40 Gew.-%, insbesondere etwa 10 bis 30 Gew.-%.

In der Regel ist es bevorzugt, wenn die erhaltenen wässrigen Dispersionen wie auch das in Wasser unlösliche Stabilisierungskolloid, wenn es als Solches separat weiter verwendet wird, einen niedrigen Anteil an organischen flüchtigen Komponenten (VOC) besitzen. Darunter werden organische Komponenten verstanden, welche einen Siedepunkt von weniger als 250°C bei Normaldruck haben. Dazu gehören beispielsweise nicht reagierte Monomere und nicht polymerisierbare in den Monomeren enthaltene Verunreinigungen und Nebenprodukte der Polymerisation. Der VOC-Gehalt beträgt zweckmässigerweise weniger als etwa 2000 ppm, bevorzugt weniger als etwa 1000 ppm, insbesondere weniger als etwa 500 ppm und ganz besonders bevorzugt weniger als etwa 250 ppm, bezogen auf den Feststoffgehalt der wässrigen Dispersion, respektive auf das in Wasser unlösliche Stabilisierungskolloid.

Idealerweise wird die Reaktionsführung zur Herstellung der wässrigen Dispersion und/ oder des in Wasser unlöslichen Stabilisierungskolloids so gewählt, dass keine weitere Restmonomerreduktion durchgeführt werden muss. Ist jedoch eine solche notwendig, kann sie durch nachfolgende Polymerisation der Restmonomeren und/ oder durch physikalische Entfernung der Restmonomeren und gegebenenfalls weiterer flüchtiger organischer Komponenten mittels Einleiten von Dampf und/ oder Gas durchgeführt werden.

Die Partikelgrösse des in Wasser unlöslichen Stabilisierungskolloids beträgt etwa 50 bis 2000 nm, bevorzugt etwa 80 bis 1000 nm, insbesondere etwa 100 bis 500 nm und der erhaltenen Dispersion etwa 0.1 bis 5 µm, bevorzugt etwa 0.2 bis 2 µm, insbesondere etwa 0.25 bis 1.5 µm, wobei die Partikelgrösse mittels Lichtstreuung gemessen und als volumetrisches Mittel angegeben ist.

Es ist nicht notwendig, dass das Zetapotential des in Wasser unlöslichen Stabilisierungskolloids und der wässrigen Dispersion stark ausgeprägt ist. Daher genügt in der Regel ein Zetapotential, gemessen im elektrischen Feld, von etwa -2.5 mV oder weniger, bevorzugt von etwa -5 mV oder weniger, insbesondere von etwa -7.5 mV oder weniger.

Der Feststoffgehalt des in Wasser unlöslichen Stabilisierungskolloids beträgt in der Regel etwa 15 bis 75 Gew.-%, bevorzugt etwa 30 bis 70 Gew.-%, insbesondere etwa 40 bis 65 Gew.-% und derjenige der wässrigen Dispersion etwa 30 bis 75 Gew.-%, bevorzugt etwa 40 bis 70 Gew.-%, insbesondere etwa 45 bis 65 Gew.-%.

Aus den eingesetzten Monomeren lässt sich jeweils die Glasübergangstemperatur Tg der hergestellten Copolymerisate und somit der Emulsionspolymerisate sowohl empirisch berechnen wie auch experimentell bestimmen. Anhand der bekannten Fox Gleichung (T.G. Fox, Bull. Am. Phy. Soc. (serll) 1, 123 (1956) und Ullmann's Enzyklopädie der Technischen Chemie, Bd. 19, 4. Auflage, Verlag Chemie, Weinheim, 1980, S. 17/18) können sie empirisch berechnet werden: 1/ Tg = x_{A}/ T_{gA} + x_{B}/ T_{gB} + ..... + xₙ/ T_{gn}, wobei x_{A}, x_{B} .... die Massenbrüche der eingesetzten Monomere A, B, ... (in Gew.-%) und T_{gA}, T_{gB}, .... die Glasübergangstemperaturen Tg in Kelvin der jeweiligen Homopolymerisate von A, B, ... sind. Diese sind beispielsweise in Ullmann's Encyclopedia of Industrial Chemistry, VCH, Weinheim, Vol. A21 (1992), S. 169 aufgelistet. Eine andere Möglichkeit, die Glasübergangstemperaturen Tg der Copolymerisate zu bestimmen, ist die experimentelle Bestimmung, beispielsweise mittels DSC, wobei die Mitteltemperatur herangezogen werden soll (midpoint temperature gemäss ASTM D3418-82).

Zur vorteilhaften Ausführung der Erfindung ist es bevorzugt, dass die Glasübergangstemperatur Tg, gemessen als midpoint Temperatur gemäss ASTM D3418-82, des zur Stabilisierung der Dispersion verwendeten in Wasser unlöslichen Stabilisierungskolloids, zwischen etwa 0 und 80°C, bevorzugt zwischen etwa 5 und 70°C, insbesondere zwischen etwa 10 und 60°C, und die Glasübergangstemperatur Tg des nachfolgend hergestellten Homo- oder Copolymerisates der wässrigen Dispersion zwischen etwa -50 und +80°C, bevorzugt zwischen etwa -40 und +50°C, insbesondere zwischen etwa -20 und +30°C, liegt, wobei es oft vorteilhaft ist, wenn die Glasübergangstemperatur des in Wasser unlöslichen Stabilisierungskolloids höher ist als diejenige des nachfolgend hergestellten Polymerisates.

Oft ist es bevorzugt, wenn die Dispersion bei der Anwendung einen Film bildet. Für diese Fälle sollte die Mindestfilmbildetemperatur (MFT) der 50%-igen wässrigen Dispersionszusammensetzung gemäss DIN 53787 zweckmässigerweise kleiner als etwa +30°C, bevorzugt kleiner als etwa +20°C, insbesondere kleiner als etwa +10°C, betragen. Wenn die Mindestfilmbildetemperatur zu hoch liegt, ist es auch möglich, der Dispersion Filmbildehilfsmittel in Mengen von bis etwa 5 Gew.-%, insbesondere bis etwa 2 Gew.-%, bezogen auf den Feststoffgehalt der Dispersion, zuzugeben.

Die erfinderische wässrige Dispersion eignet sich überraschenderweise gut zur Herstellung von in Wasser redispergierbaren Polymer-Pulvern. Dazu ist es oft hilfreich, wenn der wässrigen Dispersion noch ein oder mehrere wasserlösliche Polymere zugesetzt werden, die einen nonionischen, anionischen, kationischen oder amphoteren Charakter haben, wobei nonionische und anionische Polymere bevorzugt werden. Der Gehalt dieser Polymere beträgt in der Regel, bezogen auf den Feststoffgehalt der Dispersion, etwa 1 bis 15 Gew.-%, kann aber auch bei Bedarf höher oder niedriger sein. Oft sind Mengen von etwa 3 bis 8 Gew.-% bevorzugt.

Geeignete wasserlösliche Polymere sind beispielsweise ein oder mehrere Polyvinylpyrrolidone und/ oder Polyvinylacetale mit Molekulargewichten von 2000 bis 400'000, voll- oder teilverseifte und/ oder modifizierte voll- oder teilverseifte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 100 mPas, insbesondere von etwa 3 bis 50 mPas (gemessen bei 20°C nach DIN 53015) sowie Melaminformaldehydsulfonate, Naphthalinformaldehydsulfonate, Blockcopolymerisate von Propylenoxid und Ethylenoxid, Styrol-Maleinsäure- und/ oder Vinylether-Maleinsäure-Copolymerisate.

Die anschliessende Trocknung erfolgt bevorzugt mittels Sprühtrocknung, Gefriertrocknung, Fliessbetttrocknung, Walzentrocknung und/ oder Schnelltrocknung. Sprühtrocknung ist besonders bevorzugt, wobei in vielen Fällen Eingangstemperaturen zwischen etwa 120 und 180°C und Ausgangstemperaturen zwischen etwa 50 und 100°C vorteilhaft sind.

Der wässrigen Dispersion und/ oder dem in Wasser redispergierbaren Polymer-Pulver können noch weitere Zusatzstoffe vor, während und/ oder nach der Trocknung zugegeben werden, wie Polymerdispersionen, Hydrophobierungsmittel, insbesondere Fettsäuren sowie deren Salze und Ester, Silane und/ oder Siloxane, Luftporenbildner, Netzmittel, Entschäumer, Filmbildehilfsmittel, Abbinde- und Erstarrungsbeschleuniger, Abbindeverzögerer, Verdickungsmittel, Biozide, Entschäumer, Dispergiermittel, Zementverflüssiger, Polycarboxylate, Polycarboxylatether, Polyacrylamide, Wasserretentionsmittel, Cellulosefasern und Celluloseether, Stärkeether, Guarether, Additive zur Reduktion von Ausblühungen, der Sedimentation und/ oder des Ausschwimmens, pulverförmige, wasserlösliche Polymere, wie ein oder mehrere Polyvinylpyrrolidone und/ oder Polyvinylacetale mit Molekulargewichten von 2000 bis 400'000, voll- oder teilverseifte und/ oder modifizierte voll- oder teilverseifte Polyvinylalkohole mit einem Hydrolysegrad von bevorzugt etwa 70 bis 100 Mol-%, insbesondere von etwa 80 bis 98 Mol-%, und einer Höpplerviskosität in 4%iger wässriger Lösung von bevorzugt 1 bis 100 mPas, insbesondere von etwa 3 bis 50 mPas (gemessen bei 20°C nach DIN 53015), Füllstoffe, Pigmente sowie Pulver, welche mit Wasser alkalisch reagieren, wie beispielsweise Oxide und/ oder Hydroxide von Alkali- und/ oder Erdalkalisalzen, wie beispielsweise Calciumhydroxid, Calciumoxid, Natrium- und/ oder Kaliumhydroxid sowie Aluminiumhydroxid und/ oder Additive zur Reduktion der Pulververblockung. Flüssige Komponenten werden bevorzugt vor oder während der Trocknung zugegeben, können aber auch nachträglich auf das Pulver gesprüht werden. Pulverförmige Komponenten werden bevorzugt während oder nach der Sprühtrocknung zugegeben, können aber auch der flüssigen Dispersion vor dem Trocknungsschritt zugegeben werden.

Als Silane, Silanester, Silikone und/ oder Siloxane können grundsätzlich alle Organosiliciumverbindungen eingesetzt werden. Es ist jedoch von Vorteil, jedoch nicht zwingend, wenn der Siedepunkt bei Normaldruck der eingesetzten Organosiliciumverbindung nicht zu niedrig ist, bevorzugt etwa 100 °C oder mehr. Die Organosiliciumverbindungen können in Wasser löslich, unlöslich oder nur teilweise löslich sein. Bevorzugt sind dabei Verbindungen, welche keine oder nur eine limitierte Wasserlöslichkeit besitzen. Dies können Kieselsäureester sein mit der Formel Si(OR')₄, Organoxysilane der Formel Siₙ(OR')₄₋ₙ mit n = 1 bis 3, Polysilane der Formel R₃Si(SiR₂)ₙSiR₃ mit n = 0 bis 500, wobei n = 0 bis 8 bevorzugt ist, Di-, Oligo- und Polysiloxane aus Einheiten der allgemeinen Formel R_{c}H_{d}Si(OR')ₑ(OH)_{f}O_{(4-c-d-e-f)/2} mit c = 0 bis 3, d = 0 bis 2, e = 0 bis 3, f = 0 bis 3 und die Summe c+d+e+f je Einheit höchstens 3,5 ist, wobei R' für gleiche oder verschiedene Alkylreste oder Alkoxyalkylenreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloakylreste mit 3 bis 10 C-Atomen, Alkylenreste mit 2 bis 4 C-Atomen, Aryl-, Aralkyl-, Alkylarylreste mit 6 bis 18 C-Atomen bedeutet, wobei die genannten Reste R auch mit Halogenen, wie F oder Cl, mit Ether-, Thioether-, Ester-, Amid-, Nitril-, Hydroxyl, Amin-, Carboxyl-, Sulfonsäure-, Carbonsäureanhydrid- und Carbonylgruppen substituiert sein können, wobei im Falle der Polysilane R auch die Bedeutung OR' haben kann.

Eine spezielle Ausführungsform ist die Zugabe mindestens einer weiteren organischen Komponente mit funktionellen Gruppen. Ist diese Komponente flüssig, wird sie bevorzugt der wässrigen Dispersion oder dem in Wasser redispergierbaren Polymer-Pulver während dessen Herstellung zugegeben oder in pulverförmige Form überführt. Ist sie pulverförmig, kann sie dem in Wasser redispergierbaren Polymer-Pulver während oder nach der Trocknung zugemischt werden, oder in gelöster oder dispergierter Form mit der wässrigen Dispersion vermischt werden. Die organische Komponente mit funktionellen Gruppen reagiert bevorzugt in alkalischem Medium entweder mit sich selbst und/ oder einer anderen Verbindung. Beispiele solcher Verbindungen sind Vernetzer, wie Epoxide, Epoxydharze, Oligo- und/ oder Polyamine, bifunktionelle maskierte Aldehyde mit wenigsten 3 Kohlenstoffatomen, Silane, Siloxane, Isocyanate, welche gegebenenfalls zusammen mit Hydroxyverbindungen, wie Polyole, eingesetzt werden können, Borsäure und/ oder Borax und/ oder Verbindungen mit Carbodiimid-, Carboxyl- und/ oder Epichlorhydringruppen.

Ganz speziell bevorzugte weitere Zusatzstoffe sind Polysaccharidether, insbesondere Cellulose- und/ oder Stärkeether, Hydrophobierungsmittel, wie Silane, Silanester, Fettsäuren sowie deren Salze und Ester, Mittel zur Reduktion von Ausblühungen, insbesondere auf Basis von Naturharzen, Cellulosefasern, Entschäumer und/ oder Pigmente.

Der Anteil der weiteren Zusatzstoffe kann, bezogen auf den Feststoffgehalt der Dispersion, respektive bezogen auf das Polymer-Pulver, beispielsweise für grenzflächenaktive Substanzen sehr klein sein und im Rahmen von etwa 0,01 Gew.-% oder mehr, insbesondere etwa 0,1 Gew.-% und mehr liegen, soll jedoch in der Regel etwa 10 Gew.-%, insbesondere etwa 5 Gew.-% nicht übersteigen. Andererseits kann der Anteil an beispielsweise zugemischten Pigmenten höher sein und sogar 100 Gew.-% übersteigen.

Das erfindungsgemässe in Wasser unlösliche Stabilisierungskolloid kann nicht nur zur Stabilisierung von wässrigen, mittels radikalischer Polymerisation hergestellten Dispersionen verwendet werden. Vielmehr kann es anderweitig eingesetzt werden, wie beispielsweise zur Stabilisierung von Silan- und/ oder Siloxandispersionen, Harzsäuredispersionen, Kolophonium- und Kolophoniumesterdispersionen, als Sprühhilfsmittel und/ oder zur Verkapselung von weiteren organischen und/ oder anorganischen Verbindungen, insbesondere von hydrophoben und/ oder wasserunlöslichen Materialien.

Die erfindungsgemässen wässrigen Dispersionen und in Wasser redispergierbaren Polymer-Pulver finden bevorzugt Verwendung als organisches polymeres Bindemittel in mineralisch abbindenden Systemen, insbesondere in hydraulisch, latent-hydraulisch und nicht-hydraulisch abbindenden Systemen, wobei letztere unter Einfluss von Luft und Wasser reagieren sowie in nicht-mineralisch abbindenden Systemen, insbesondere in zementfreien Putzen, in Farben, wie Dispersionsfarben, Druckfarben und/ oder Ink-Jet Farben, Textilien, Klebstoffen, als Bindemittel für Holz, Nonwovens, Papier und deren Herstellung, und/ oder als Bindemittel von Pressmassen und Formkörper.

Bevorzugt werden die mineralisch abbindende Systeme, enthaltend die erfindungsgemässe wässrige Dispersionen und/ oder in Wasser redispergierbaren Polymer-Pulver, als Fliesenkleber, Vollwärmeschutzmörtel, Nivelliermassen, Reparaturmörtel, Gips- und/ oder Kalk- und/ oder Zement- Putze, Fugenmörtel, Dichtungsschlämme, Spachtelmassen, Tapetenkleister, Parkettklebstoffe, Pulverfarben, Mörtel für Haftbrücken, Grundierungen und/ oder als zementbasierte Massen für Erdöl-, Erdgas-, und/ oder Erdwärme-Bohrlöcher verwendet.

Die Erfindung wird anhand der nachfolgenden Beispiele noch näher erläutert, wobei folgende Abkürzungen verwendet werden:
- AMPS: Eine 50 gew.-%ige wässrige Lösung des Natrium-Salzes der 2-Acrylamido-2-methylpropansulfonsäure (Lubrizol Monomer AMPS 2403)
- MMA: Methylmethacrylat
- BA: Butylacrylat
- ALMA: Allylmethacrylat
- DT: 1-Dodecanthiol
- APS: Ammoniumpersulfat
- TBHP-70: Eine 70 gew.-%ige wässrige Lösung von tert-Butylhydroperoxid
- SFS: Natriumformaldehydsulfoxylat
- PVOH: Teilhydrolysierter Polyvinylalkohol mit einem Hydrolysegrad von 88 Mol-% und einer Höpplerviskosität in 4%iger wässriger Lösung von 4 mPas

### Beispiel 1.

### A) Herstellung eines in Wasser unlöslichen Stabilisierungskolloids SK-1 und nachfolgend der Dispersion Disp-1.

2.0 AMPS, 0.3 g DT und 350 g Wasser wurden in einem 2-Liter-Polymerisationsreaktor mit mechanischem Rührer vorgelegt und auf 85°C aufgeheizt. Eine Minute nach der Zugabe einer Lösung von 0.12 g APS, gelöst in 6.2 g Wasser, wurde die parallele Dosierung von 42 g AMPS, der Mischung aus 80 g MMA, 40 g BA und 2.4 g DT sowie einer Lösung von 0.12 g APS, gelöst in 6.2 g Wasser, gestartet und kontinuierlich während einer Stunde zudosiert. Anschliessend wurde noch eine weitere halbe Stunde bei Reaktionstemperatur ausreagiert. Das erhaltene in Wasser unlösliche Stabilisierungskolloid fällt als eine weisse niedrigviskose Dispersion an.

Die Reaktortemperatur wurde anschliessend auf 75°C eingestellt. Nach der separaten, sofortigen Zugabe von 3 g TBHP-70 und einer Lösung von 0.2 g SFS, gelöst in 20 g Wasser, wurde eine Monomermischung, bestehend aus 260 g MMA, 340 g BA und 0.6 g ALMA, während 2 Stunden und eine Lösung von 1.8 g SFS, gelöst in 60 g Wasser, während 2.5 Stunden kontinuierlich zudosiert. Nach Ende der Monomerdosierung wurden 0.57 g TBHP-70 zugegeben. Nach Ende der SFS Dosierung und nachdem keine exotherme Reaktion mehr beobachtet wurde, erfolgte die Zugabe von 12 g MMA, 0.37 g TBHP-70 sowie 0.26 g SFS, gelöst in 5 g Wasser, wobei gleichzeitig die Temperatur auf 90°C erhöht wurde. Nach weiteren 30 Minuten bei dieser Temperatur wurde auf Raumtemperatur abgekühlt. Es wurde eine weisse Dispersion mit einem Feststoffgehalt von 63 Gew.-%, einer Brookfield Viskosität bei 23°C von 1700 mPas, einem pH-Wert von 2.1 und einer Partikelgrösse (volumetrisches Mittel) der Latexteilchen von 0.85 µm erhalten.

### B) Herstellung des in Wasser redispergierbaren Polymer-Pulvers PP-1.

457.1 g der Dispersion Disp-1 und 49.2 g einer 25 gew.-%igen wässrigen Lösung von PVOH wurden gemischt und mit Wasser auf einen Feststoffgehalt von 25 Gew.-% verdünnt. Diese Mischung wurde mittels konventioneller Sprühtrocknung bei einer Eingangstemperatur von 120°C zu einem weissen, freifliessenden, in Wasser gut redispergierenden Pulver getrocknet, wobei keine nennenswerte Verschmutzung im Sprühturm festzustellen war und die Ausbeute im normalen Bereich lag. Das erhaltende Pulver wurde anschliessend mit 18 Gew.-% eines handelsüblichen Carbonates versetzt. Ein anschliessend hergestellter Pulverfilm mit einer 50 gew.-%igen wässrigen Redispersion zeigte in einer nachfolgend durchgeführten Zug-Dehnungsmessung gute Werte. Dies ist einerseits auf eine gute Redispersion und andererseits auf eine nachfolgend gute Verfilmung zurückzuführen.

### Beispiel 2.

### A) Herstellung des in Wasser unlöslichen Stabilisierungskolloids SK-2.

12 g AMPS, 1.8 g DT und 685 g Wasser wurden in einem 2-Liter-Polymerisationsreaktor mit mechanischem Rührer vorgelegt und auf 85°C aufgeheizt. Eine Minute nach der Zugabe einer Lösung von 7 g APS, gelöst in 30 g Wasser, wurde die parallele Dosierung von 252 g AMPS, der Mischung aus 480 g MMA, 240 g BA und 14.4 g DT sowie einer Lösung von 7 g APS, gelöst in 30 g Wasser, gestartet und kontinuierlich während einer Stunde zudosiert. Anschliessend wurde noch eine weitere halbe Stunde bei Reaktionstemperatur ausreagiert. Es wurde ein in Wasser unlösliches Stabilisierungskolloid in Form einer weissen niedrigviskosen Dispersion erhalten mit einem Feststoffgehalt von 50 Gew.-%, einer Partikelgrösse (volumetrisches Mittel) der Stabilisierungskolloidteilchen von 0.36 µm und einer Brookfieldviskosität von 190 mPas, gemessen bei 23°C mit Spindel 2 bei 100 Upm.

### B) Herstellung der Dispersion Disp-2.

275 g des hergestellten in Wasser unlöslichen Stabilisierungskolloids SK-2 und 240 g Wasser wurden in einem 2-Liter-Polymerisationsreaktor mit mechanischem Rührer vorgelegt und auf 75°C aufgeheizt. Nach der Zugabe von 5 g TBHP-70 und 0.2 g SFS, gelöst in 20 g Wasser, wurde die separate Dosierung einer Monomermischung, bestehend aus 260 g MMA, 340 g BA und 0.6 g ALMA über 2 Stunden und 1.8 g SFS, gelöst in 180 g Wasser, über 2.5 Stunden gestartet. Nach dem Ende der Monomerdosierung wurden weitere 0.57 g TBHP-70 zugegeben. Nach dem Ende der SFS-Dosierung und nachdem keine exotherme Reaktion mehr beobachtet wurde, erfolgte die Zugabe von 12 g MMA, 0.37 g TBHP-70 und 0.26 g SFS gelöst in 5 g Wasser. Gleichzeitig wurde die Temperatur auf 90°C erhöht. Nach weiteren 30 Minuten wurde auf Raumtemperatur abgekühlt und aus dem Reaktor entladen. Es wurde eine weisse niedrigviskose Dispersion erhalten mit einem Feststoffgehalt von 57.0 Gew.-%, einer Partikelgrösse (volumetrisches Mittel) der Latexteilchen von 0.40 µm und einer Brookfieldviskosität von 330 mPas, gemessen bei 23°C mit Spindel 3 bei 100 Upm.

### C) Herstellung des in Wasser redispergierbaren Polymer-Pulvers PP-2.

225 g der Dispersion Disp-2 und 58 g einer 25 gew.-%igen wässrigen PVOH-Lösung wurden gemischt und mit Wasser auf einen Feststoffgehalt von 35 Gew.-% verdünnt. Diese Mischung wurde analog dem Beispiel 1B) versprüht und mit Füllstoff abgemischt. Es resultierte ein weisses, freifliessendes, in Wasser gut redispergierendes Pulver, wobei keine nennenswerte Verschmutzung im Sprühturm festzustellen war und die Ausbeute im normalen Bereich lag.

### Vergleichsbeispiel 1.

Das Beispiel 1 aus der Offenlegungsschrift DE 195 06 331 A1 wurde wiederholt. 435.8 g dieser Dispersion wurden mit 82.6 g einer 25 gew.-%igen wässrigen PVOH-Lösung vermischt und mit Wasser auf einen Feststoffgehalt von 25 Gew.-% verdünnt und analog zu Beispiel 1B) versprüht. Es resultierte ein grobkörniges, nicht freifliessendes Pulver in sehr geringer Ausbeute von 20%, welches in Wasser auch unter starkem Rühren nicht redispergiert. Es konnte kein Pulverfilm anhand einer Redispersion hergestellt werden.

### Beispiel 3. Anwendungstechnische Überprüfung in einer caseinfreien, selbstverlaufenden Nivelliermasse.

Es wurde eine Trockenmörtelformulierung gemäss Tabelle 1 hergestellt, welche mit 21 Gew.-% Wasser, bezogen auf den Trockenmörtel, angerührt wurde. Dazu wurden jeweils 100g der Trockenmörtelformulierung mit einem 60mm Propellerrührer mit einer Geschwindigkeit von 950 Upm während 60 Sekunden angerührt, wobei die entsprechende Menge Anmachwasser unter Rühren zugegeben wurde. Nach einer Reifezeit von 3 Minuten, wurde der Mörtel vor der Messung nochmals 15 Sekunden mit dem Rührer durchmischt. Damit wurde das Ausbreitmass in Anlehnung an EN 12706 gemessen und die Durchlaufszeit des Mörtels in einem Fordbecher nach DIN 53211 mit einer 6mm-Düse bestimmt.

**Tabelle 1: Trockenmörtelformulierung der eingesetzten Nivelliermasse**

| | |
|---|---|
| PZ Anneliese Milke 52,5R premium | 23.00 Gew.-% |
| HAC Fondu Lafarge | 12.00 Gew.-% |
| Kalkhydrat | 1.00 Gew.-% |
| Hartformengips No.1 | 4.10 Gew.-% |
| Quarzsand 0,1-0,3mm | 42.20 Gew.-% |
| Calciumcarbonat Omyacarb 10BG | 15.00 Gew.-% |
| Abbindeverzögerer | 0.18 Gew.-% |
| Pulver-Entschäumer | 0.12 Gew.-% |
| Celluloseether | 0.08 Gew.-% |
| Lithiumcarbonat | 0.20 Gew.-% |
| Polycarboxylat-Verflüssiger | 0.15 Gew.-% |
| Polymer-Pulver | 2.00 Gew.-% |

**Tabelle 2: Bestimmung des Ausbreitmasses in Anlehnung an EN 12706 und der Durchlaufviskosität der Nivelliermasse gemäss Tabelle 1 im Fordbecher nach DIN 53211 mit einer 6mm-Düse.**

| Polymer-Pulver | Ausbreitmass [mm] | | Durchlaufviskosität [sek] |
|---|---|---|---|
| | 5 Min. ^{a)} | 10 Min.^{a)} | |
| Ref-1^{b)} | 155 | 154 | 42 |
| PP-1 | 154 | 153 | 65 |

| | | | |
|---|---|---|---|
| a) Der Ring wurde nach 5 resp. 10 Minuten nach Beginn des Anrührvorgangs entfernt. b) Das Referenz Polymer-Pulver Ref-1 ist ein für diese Anwendung übliches, kommerziell erhältliches Polymer-Pulver auf Basis eines mit Polyvinylalkohol stabilisierten Ethylen-Vinylacetat - Copolymerisates. | | | |

Das Rheologische Verhalten der getesteten Masse zeigt einerseits, dass das Ausbreitmass des erfinderischen Pulvers PP-1 vergleichbare Werte ergibt wie kommerziell eingesetzte Pulver. Andererseits wird durch den Einsatz von PP-1 eine so genannte "honigartige" Konsistenz der Nivelliermasse erhalten, welche durchaus vergleichbar mit caseinhaltigen Nivelliermassen ist. Dies ist für den Verarbeiter eine äusserst wünschenswerte Eigenschaft, da insbesondere die Oberfläche der applizierten Masse sich selber glättet, aber für caseinfreie Massen kaum erreichbar ist.

### Beispiel 4. Anwendungstechnische Überprüfung in einem zementfreien Kunstharzputz.

Es wurde eine Trockenmörtelformulierung gemäss Tabelle 3 hergestellt, welche mit Wasser auf eine gut zu verarbeitende Konsistenz angerührt wurde. Diese wurde in einer 1 mm dicken, 6.8 cm breiten und 30 cm langen Schicht auf eine Faserzementplatte aufgezogen und während 2 Tagen bei 23°C und 50 %-iger relativer Luftfeuchtigkeit gelagert.

**Tabelle 3: Trockenmörtelformulierung des eingesetzten zementfreien Kunstharzputzes. Die eingesetzte Menge an Dispersion bezieht sich auf den Feststoffgehalt der Dispersion.**

| | |
|---|---|
| Durcal 65 | 30.0 Gew.-% |
| Quarzsand 0.1-0.5 mm | 51.7 Gew.-% |
| Kronos 2044 | 3.0 Gew.-% |
| Pulver-Entschäumer | 0.1 Gew.-% |
| Celluloseether | 0.2 Gew.-% |
| Dispersion / Polymer-Pulver | 15.0 Gew.-% |

Die Nassabriebbeständigkeit wurde in Anlehnung an DIN 53778 mit einer Nylonborstenbürste und einer 0.25 gew.-%igen wässrigen Natriumdodecylsulfat - Lösung getestet. Nach 2000 Reibzyklen wurden die Prüfkörper getrocknet und mittels einer Skala von 6 (kein Abrieb; sehr gut) bis 1 (Abrieb bis auf den Untergrund; sehr schlecht) bewertet.

**Tabelle 4: Verwendete Anmachwassermenge für die Trockenmörtelformulierung der Tabelle 3 und gemessene Nassabriebbeständigkeiten der mit verschiedenen Polymeren applizierten Kunstharzputze.**

| | Disp-2 | PP-2 | Ref-2 ^{c)} |
|---|---|---|---|
| Anmachwassermenge^{a)} | 21.5 | 20 | 21 |
| Nassabriebbeständigkeit^{b)} | 5.5 | 4.5 | 2.5 |

| | | | |
|---|---|---|---|
| a) Die Anmachwassermenge ist in Gew.-% angegeben und bezieht sich auf den gesamten zugegebenen Wassergehalt, inklusive des in der Dispersion enthaltenen Wassers. b) Die Bewertungsskala geht von 6 "kein Abrieb; sehr gut" bis 1 "Abrieb bis auf den Untergrund; sehr schlecht". c) Das Referenz Polymer-Pulver Ref-2 ist ein für diese Anwendung verwendetes, kommerziell erhältliches Polymer-Pulver auf Basis eines mit Polyvinylalkohol stabilisierten Vinylacetat-Vinylversatat - Copolymerisates. | | | |

### Beispiel 5. Anwendungstechnische Überprüfung des Abbindeverhaltens in einer Zementslurry.

Es wurde eine Trockenzementformulierung hergestellt, wobei 97.2 Gew.-% Zement der API Klasse G (American Petroleum Institut), 2.2 Gew.-% in Wasser redispergierbares Polymer-Pulver, 0.15 Gew.-% Hydroxyethyl Cellulose H100000YP2 und 0.5 Gew.-% eines sulfonierten Polykondensationsprodukt auf Melamin-Basis miteinander vermischt wurden.

500 g dieser Formulierung wurden mit Wasser mit einem 60mm Propellerrührer mit einer Geschwindigkeit von 950 Upm während 60 Sekunden angerührt, wobei das Anmachwasser unter Rühren zugegeben wurde. Die Wassermenge wurde so gewählt, dass ein Wasser-Zementfaktor w/z von 0.44 resultierte. Nach einer Reifezeit von 3 Minuten wurde der Mörtel von Hand nochmals kurz aufgerührt, wobei anschliessend das Abbindeverhalten bei 23°C und 50% relativer Luftfeuchtigkeit mit einem Vicat-Nadelgerät nach DIN 1164 gemessen wurde.

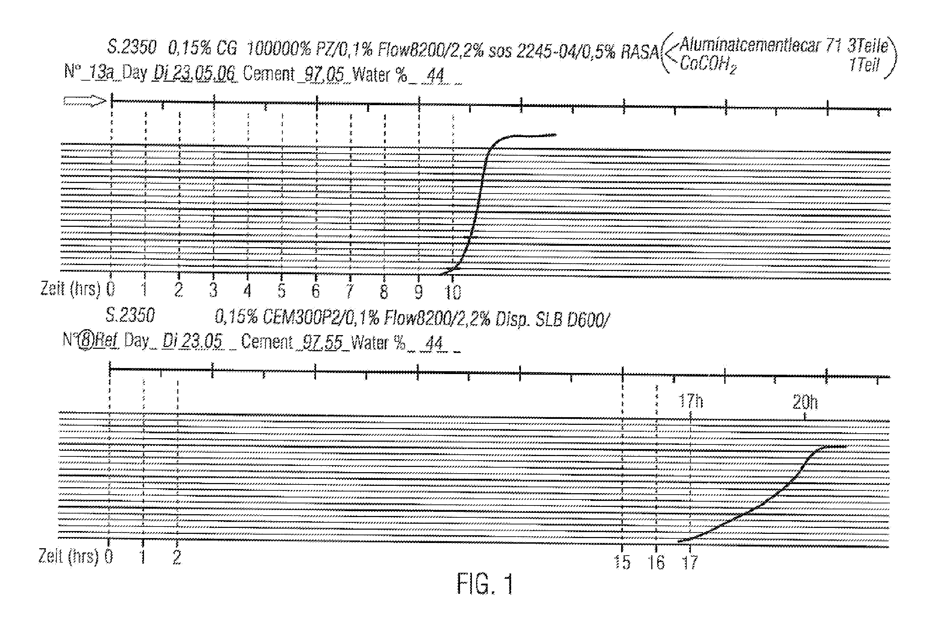

In Figur 1 (Fig. 1) sind die Abbindekurven dargestellt, wobei die obere Kurve mit dem in Wasser redispergierbaren Polymer-Pulver PP-1 erhalten wurde. Der Abbindebeginn war nach ca. 10 Stunden und das Abbindeende nach ca. 11 ¼ Stunden. Die untere Kurve wurde mit einer handelsüblichen Styrol-Butadien - Dispersion gemessen, welche zum Zementieren von Erdbohrlöchern eingesetzt wird. Der Abbindebeginn war nach ca. 17 Stunden, und das Abbindeende nach ca. 20 Stunden. Als Vergleich wurde zudem ein in Wasser redispergierbares Polymer-Pulver Ref-3 gemessen, welches ein Polymer-Pulver auf Basis einer mit Polyvinylalkohol stabilisierten wässrigen Styrol-Acrylat - Dispersion darstellt, wobei der Abbindebeginn nach ca. 13 Stunden und das Abbindeende nach ca. 14 ½ Stunden war.

Das nach Abbindebeginn schnelle Aushärten des Mörtels ist in vielen Anwendungen vorteilhaft, wie beispielsweise bei Nivelliermassen, was sowohl eine lange Verarbeitungszeit, wie auch eine schnelle Erhärtung und somit eine frühe Begehbarkeit zur Folge hat. Durch Einsatz der erfinderischen Dispersion oder des erfinderischen Polymer-Pulvers werden diese Eigenschaften erhalten, ohne dass diese aufwändig mittels Steuerungshilfsmitteln, welche der Trockenzementformulierung zugesetzt werden können, eingestellt werden müssen. Zudem finden diese Eigenschaften auch bei der Erdbohrloch-Zementierung, insbesondere beim Zementieren von ÖI-, Gas- und/ oder Erdwärme-Bohrlöchern, Anwendung. Überraschenderweise wurde auch gefunden, dass die erfinderischen Dispersionen und Polymer-Pulver auch bei erhöhten Temperaturen, beispielsweise bei 90°C und 130°C, ein ähnliches, insbesondere ein rechtwinkliges, Abbindeverhalten zeigen, ohne dass die verwendete Dispersion oder das verwendete Polymer-Pulver geliert, wie dies beim Polymer-Pulver Ref-3 der Fall ist. Dies ermöglicht daher auch den problemlosen Einsatz bei erhöhten Temperaturen und Drücken.

Neben den in den Beispielen aufgezeigten Anwendungen, können die erfinderischen in Wasser unlöslichen Stabilisierungskolloide, Dispersionen und in Wasser redispergierbaren Polymer-Pulver auch anderweitig eingesetzt werden, wie zum Beispiel in Reparaturmörteln, Fliesenklebern, Vollwärmeschutzmörteln, Gips- und/ oder Kalk- und/ oder Zement-Putzen, Fugenmörteln und/ oder Dichtungsschlämmen.

## Patentansprüche

1. Verfahren zur Herstellung von wässrigen Dispersionen, welche mit einem in Wasser unlöslichen Stabilisierungskolloid stabilisiert sind, **dadurch gekennzeichnet, dass**
a) in einem ersten Schritt ein in Wasser unlösliches Stabilisierungskolloid hergestellt wird, wobei dieses, bezogen auf die zur Herstellung des Stabilisierungskolloids eingesetzten Monomermenge, mittels radikalischer Polymerisation von
a1) 3 bis 50 Gew.-% von mindestens einem olefinisch ungesättigten Monomer, enthaltend mindestens eine Sulfat- und/ oder Sulfonatgruppe, die gegebenenfalls protoniert sein kann,
a2) 20 bis 97 Gew.-% von mindestens einem olefinisch ungesättigten Monomer mit einer Wasserlöslichkeit bei 20°C von weniger als 50 g/l, und
a3) bis 30 Gew.-% von mindestens einem olefinisch ungesättigten Monomer mit einer Wasserlöslichkeit bei 20°C von mehr als 50 g/l,
in Wasser hergestellt wird, gefolgt von
b) der Zugabe von mindestens einem weiteren olefinisch ungesättigten Monomer und mindestens einem Initiator, wobei durch radikalische Polymerisation des weiteren olefinisch ungesättigten Monomers eine wässrige Dispersion erhalten wird, an welcher
c) gegebenenfalls eine Restmonomerreduktion durchgeführt wird, wobei diese durch Polymerisation von Restmonomeren und/ oder durch physikalische Entfernung der Restmonomeren und gegebenenfalls weiterer flüchtiger organischer Komponenten mittels Einleiten von Dampf und/ oder Gas ausgeführt wird.

2. Verfahren nach Anspruch 1, **dadurch gekennzeichnet, dass** das in Wasser unlösliche Stabilisierungskolloid, bezogen auf die zur Herstellung des Stabilisierungskolloids eingesetzten Monomermenge, mittels radikalischer Polymerisation von
a1) 5 bis 30 Gew.-%, von mindestens einem olefinisch ungesättigten Monomer, enthaltend mindestens eine Sulfat- und/ oder Sulfonatgruppe, die gegebenenfalls protoniert sein kann,
a2) 50 bis 95 Gew.-%, von mindestens einem olefinisch ungesättigten Monomer mit einer Wasserlöslichkeit bei 20°C von weniger als 50 g/l, und
a3) bis 20 Gew.-%, von mindestens einem olefinisch ungesättigten Monomer mit einer von Wasserlöslichkeit bei 20°C von mehr als 50 g/l,
hergestellt wird.

3. Verfahren nach Anspruch 1 oder 2, **dadurch gekennzeichnet, dass** die Partikelgrösse des in Wasser unlöslichen Stabilisierungskolloids, gemessen mittels Lichtstreuung und als volumetrisches Mittel angegeben, 50 bis 2000 nm, insbesondere 80 bis 1000 nm, beträgt.

4. Verfahren nach mindestens einem der Ansprüche 1 bis 3, **dadurch gekennzeichnet, dass** das mindestens eine olefinisch ungesättigte Monomer, enthaltend mindestens eine Sulfat- und/ oder Sulfonatgruppe, ein (Meth)acrylat-, ein (Meth)acrylamid- und/ oder ein Vinyl-Monomer ist.

5. Verfahren nach Anspruch 4, **dadurch gekennzeichnet, dass** das (Meth)acrylat-Monomer (Meth-)Acrylsäure-Sulfoalkylester, das (Meth)acrylamid-Monomer 2-Acrylamido-2-methylpropane-sulfonsäure, und das Vinyl-Monomer Styrolsulfon-säure, Vinylsulfonsäure und/ oder Allylsulfonsäure ist, und/ oder deren Alkali-, Erdalkali- und/ oder Ammoniumsalze.

6. Verfahren nach mindestens einem der Ansprüche 1 bis 5, **dadurch gekennzeichnet, dass** zur Herstellung des Stabilisierungskolloids mindestens ein olefinisch ungesättigtes Monomer mit einer weiteren reaktiven Gruppe copolymerisiert wird.

7. Verfahren nach Anspruch 6, **dadurch gekennzeichnet, dass** die reaktive Gruppe des Monomers mit einer weiteren reaktiven Gruppe eine Epoxy-, Epihalohydrin-, Amin-, Ammonium-, Hydroxyl-, Aldehyd-, Keton-, Säureanhydrid-, Acetoacetonat-, Carboxyl-, Thiol-, Alkoxysilan-, Silanol-, Glycidyl-, N-Methylol-, Sulfonsäure-, Amid-, Amidin-, Imin-, Ester- und/ oder Carbonylgruppen darstellt.

8. Verfahren zur Herstellung der Dispersion nach mindestens einem der Ansprüche 1 bis 7, **dadurch gekennzeichnet, dass** weitere olefinisch ungesättigte Monomere in Anwesenheit des in Wasser unlöslichen Stabilisierungskolloids mittels radikalischer Emulsions-, Suspensions- und/ oder Mikroemulsions-Polymerisation in einem kontinuierlichen, einem Monomerzulauf-, und/ oder einem Batchverfahren, zu Homo- oder Copolymeren umgesetzt werden, wobei die Monomere im Monomerzulaufverfahren auch in Form einer Voremulsion zudosiert werden können.

9. Verfahren nach Anspruch 1 oder 8, **dadurch gekennzeichnet, dass** die weiteren olefinisch ungesättigte Monomere Vinylester, Ethylen, (Meth)acrylsäureester und/ oder (Meth)acrylamide, Maleinsäure und deren Ester, Styrol und Styrol Derivate und oder Butadien eingesetzt werden.

10. Verfahren nach mindestens einem der Ansprüche 1, 8 und/ oder 9, **dadurch gekennzeichnet, dass** zur Herstellung der Dispersion 2 bis 50 Gew.-%, insbesondere 5 bis 40 Gew.-%, bezogen auf den Feststoffgehalt der erhaltenden Dispersion, in Wasser unlösliches Stabilisierungskolloid eingesetzt wird.

11. Verfahren nach mindestens einem der Ansprüche 1 und/ oder 8 bis 10, **dadurch gekennzeichnet, dass** die Partikelgrösse der erhaltenen Dispersion, gemessen mittels Lichtstreuung und als volumetrisches Mittel angegeben, 0.1 bis 5 µm, insbesondere 0.2 bis 2 µm, beträgt.

12. Verfahren nach mindestens einem der Ansprüche 1 und/ oder 8 bis 11, **dadurch gekennzeichnet, dass** die Glasübergangstemperatur T_{g}, gemessen als midpoint Temperatur gemäss ASTM D3418-82, des zur Stabilisierung der Dispersion verwendete in Wasser unlösliche Stabilisierungskolloid, zwischen 0 und 80°C, insbesondere zwischen 5 und 70°C, und die Glasübergangstemperatur T_{g} des nachfolgend hergestellten Homo- oder Copolymerisates, zwischen 50 und +80°C, insbesondere zwischen -40 und +50°C, liegt.

13. Verfahren nach mindestens einem der Ansprüche 1 und/ oder 8 bis 12, **dadurch gekennzeichnet, dass** der Feststoffgehalt der Dispersion 30 bis 75 Gew.-%, insbesondere 40 bis 70 Gew.-%, beträgt.

14. Verfahren zur Herstellung von in Wasser redispergierbaren Polymer-Pulvern, **dadurch gekennzeichnet, dass** die erhaltene Dispersion nach mindestens einem der Ansprüche 1 und/ oder 8 bis 13 mit gegebenenfalls wasserlöslichen Polymeren und/ oder weiteren Zusatzstoffen mittels Sprühtrocknung, Gefriertrocknung, Fliessbetttrocknung, Walzentrocknung oder Schnelltrocknung getrocknet wird.

15. Verfahren nach Anspruch 14, **dadurch gekennzeichnet, dass** die wasserlöslichen Polymere teilhydrolysierter Polyvinylalkohol und/ oder Polyvinylpyrrolidon sind und die weiteren Zusatzstoffe Polymerdispersionen, Hydrophobierungsmittel, wie Fettsäuren sowie deren Salze und Ester, Silane und/ oder Siloxane, Luftporenbildner, Netzmittel, Entschäumer, Filmbildehilfsmittel, Abbinde- und Erstarrungsbeschleuniger, Abbindeverzögerer, Verdickungsmittel, Dispergiermittel, Zementverflüssiger, Polycarboxylate, Polycarboxylatether, Polyacrylamide, Wasserretentionsmittel, Cellulosefasern und Celluloseether, Stärkeether, Guarether, Additive zur Reduktion von Ausblühungen, der Sedimentation und/ oder des Ausschwimmens, Follstoffe, und/ oder Additive zur Reduktion der Pulververblockung sind und vor, während und/ oder nach der Trocknung zugegeben werden.

16. In Wasser unlösliches Stabilisierungskolloid erhältlich durch das Verfahren gemäss mindestens einem der Ansprüche 1, Schritt a), bis 8.

17. In Wasser unlösliches Stabilisierungskolloid nach Anspruch 16, wobei das in Wasser unlösliche Stabilisierungskolloid nach Anspruch 2 hergestellt wird.

18. Dispersion erhältlich durch das Verfahren gemäss mindestens einem der Ansprüche 1 und/ oder 8 bis 13.

19. Dispersion nach Anspruch 18, wobei das in Wasser unlösliche Stabilisierungskolloid nach Anspruch 2 hergestellt wird.

20. In Wasser redispergierbares Polymer-Pulver erhältlich durch das Verfahren gemäss mindestens einem der Ansprüche 14 bis 15.

21. In Wasser redispergierbares Polymer-Pulver nach Anspruch 20, wobei das in Wasser unlösliche Stabilisierungskolloid nach Anspruch 2 hergestellt wird.

22. Verwendung des nach Anspruch 16 oder 17 hergestellten in Wasser unlöslichen Stabilisierungskolloids zur Stabilisierung von Polymerdispersionen, Silane- und/ oder Siloxandispersion, Harzsäuredispersionen, Kolophonium- und Kolophoniumesterdispersionen, als Sprühhilfsmittel und/ oder zur Verkapselung von organischen und/ oder anorganischen Verbindungen.

23. Verwendung der Dispersion nach Anspruch 18 oder 19 und des in Wasser redispergierbaren Polymer-Pulvers nach Anspruch 20 oder 21 als organisches polymeres Bindemittel in mineralisch abbindenden Systemen, insbesondere in hydraulisch, latent-hydraulisch und nicht-hydraulisch abbindenden Systemen, wobei letztere unter Einfluss von Luft und Wasser reagieren, in nicht-mineralisch abbindenden Systemen, insbesondere zementfreie Putze, Farben, wie Dispersionsfarben, Druckfarben und/ oder Ink-Jet Farben, Textilien, Klebstoffe, als Bindemittel für Holz, Nonwovens, Papier und deren Herstellung, und/ oder als Bindemittel von Pressmassen und Formkörper.

24. Verwendung nach Anspruch 23, **dadurch gekennzeichnet, dass** die mineralisch abbindenden Systeme Fliesenkleber, Vollwärmeschutzmörtel, Nivelliermassen, Reparaturmörtel, Gips- und/ oder Kalk- und/ oder Zement-Putze, Fugenmörtel, Dichtungsschlämme, Spachtelmassen, Tapetenkleister, Parkettklebstoffe, Pulverfarben, und/ oder zementbasierte Massen für Erdöl-, Erdgas-, und/ oder Erdwärme-Bohrlöcher sind.

## Claims

1. Process for the preparation of aqueous dispersions which are stabilised with a water-insoluble stabilising colloid, **characterised in that**
a) in a first step a water-insoluble stabilising colloid is prepared, where, based on the amount of monomer used for the preparation of the stabilising colloid, this is prepared by means of radical polymerisation of
a1) 3 to 50 wt.% of at least one olefinically unsaturated monomer, containing at least one sulfate and/or sulfonate group, which may optionally be protonated,
a2) 20 to 97 wt.% of at least one olefinically unsaturated monomer with a solubility in water at 20°C of less than 50 g/l, and
a3) up to 30 wt.% of at least one olefinically unsaturated monomer with a solubility in water at 20°C of more than 50 g/l,
in water, followed by
b) the addition of at least one further olefinically unsaturated monomer and at least one initiator, where by radical polymerisation of the further olefinically unsaturated monomer an aqueous dispersion is obtained, on which
c) optionally a residual monomer reduction is carried out, where this is carried out through polymerisation of residual monomers and/or through physical removal of the residual monomers and optionally further volatile organic components by means of the introduction of vapour and/or gas.

2. Process according to claim 1, **characterised in that** the water-insoluble stabilising colloid, based on the amount of monomer used for the preparation of the stabilising colloid, is prepared by means of radical polymerisation of
a1) 5 to 30 wt.% of at least one olefinically unsaturated monomer, containing at least one sulfate and/or sulfonate group, which may optionally be protonated,
a2) 50 to 95 wt.% of at least one olefinically unsaturated monomer with a solubility in water at 20°C of less than 50 g/l, and
a3) up to 20 wt.% of at least one olefinically unsaturated monomer with a solubility in water at 20°C of more than 50 g/l.

3. Process according to claim 1 or 2, **characterised in that** the particle size of the water-insoluble stabilising colloid, measured by means of light scattering and indicated as volumetric mean, is 50 to 2,000 nm, more particularly 80 to 1,000 nm.

4. Process according to at least one of claims 1 to 3, **characterised in that** the at least one olefinically unsaturated monomer containing at least one sulfate and/or sulfonate group is a (meth)acrylate, a (meth)acrylamide and/or a vinyl monomer.

5. Process according to claim 4, **characterised in that** the (meth)acrylate monomer is (meth)acrylic acid-sulfoalkyl ester, the (meth)acrylamide monomer is 2-acrylamido-2-methylpropane-sulfonic acid, and the vinyl monomer is styrene sulfonic acid, vinyl sulfonic acid and/or allyl sulfonic acid, and/or the alkali, alkaline earth and/or ammonium salts thereof.

6. Process according to at least one of claims 1 to 5, **characterised in that** for the preparation of the stabilising colloid at least one olefinically unsaturated monomer is copolymerised with a further reactive group.

7. Process according to claim 6, **characterised in that** the reactive group of the monomer with a further reactive group represents an epoxy, epihalohydrin, amine, ammonium, hydroxyl, aldehyde, ketone, acid anhydride, acetoacetonate, carboxyl, thiol, alkoxysilane, silanol, glycidyl, N-methylol, sulfonic acid, amide, amidine, imine, ester and/or carbonyl group.

8. Process for the preparation of the dispersion according to at least one of claims 1 to 7, **characterised in that** further olefinically unsaturated monomers are converted in the presence of the water-insoluble stabilising colloid by means of radical emulsion, suspension and/or micro-emulsion polymerisation in a continuous process, a monomer feed process and/or a batch process into homo- or copolymers, where the monomers in the monomer feed process can also be dosed in the form of a pre-emulsion.

9. Process according to claim 1 or 8, **characterised in that** as further olefinically unsaturated monomers are used vinyl esters, ethylene, (meth)acrylic acid esters and/or (meth)acrylamide, maleic acid and the esters thereof, styrene and styrene derivatives and/or butadiene.

10. Process according to at least one of claims 1, 8 and/or 9, **characterised in that** for the preparation of the dispersion 2 to 50 wt.%, more particularly 5 to 40 wt.%, based on the solids content of the obtained dispersion, of water-insoluble stabilising colloid is used.

11. Process according to at least one of claims 1 and/or 8 to 10, **characterised in that** the particle size of the obtained dispersion, measured by means of light scattering and indicated as volumetric mean, is 0.1 to 5 µm, more particularly 0.2 to 2 µm.

12. Process according to at least one of claims 1 and/or 8 to 11, **characterised in that** the glass transition temperature Tg, measured as midpoint temperature according to ASTM D3418-82, of the water-insoluble stabilising colloid used for stabilising the dispersion is between 0 and 80°C, more particularly between 5 and 70°C, and the glass transition temperature Tg of the subsequently prepared homo- or copolymerisate is between -50 and +80°C, more particularly between -40 and +50°C.

13. Process according to at least one of claims 1 and/or 8 to 12, **characterised in that** the solids content of the dispersion is 30 to 75 wt.%, more particularly 40 to 70 wt.%.

14. Process for the preparation of a water-redispersible polymer powder, **characterised in that** the obtained dispersion according to at least one of claims 1 and/or 8 to 13 with optionally water-soluble polymers and/or further additives is dried by means of spray-drying, freeze-drying, fluid bed drying, roller drying or high-speed drying.

15. Process according to claim 14, **characterised in that** the water-soluble polymers are partially hydrolysed polyvinyl alcohol and/or polyvinyl pyrrolidone and the further additives are polymer dispersions, waterproofing agents, such as fatty acids and the salts and esters thereof, silanes and/or siloxanes, air entraining agents, wetting agents, anti-foam agents, film forming aids, setting agents and accelerator admixtures, set retarders, thickeners, dispersing agents, cement plasticisers, polycarboxylates, polycarboxylate ethers, polyacrylamides, water retention agents, cellulose fibres and cellulose ethers, starch ethers, guar ethers, additives to reduce blooming, sedimentation and/or bleeding, fillers and/or additives to reduce powder blocking, and are added before, during and/or after the drying.

16. Water-insoluble stabilising colloid obtainable by the process according to at least one of claims 1, step a), to 8.

17. Water-insoluble stabilising colloid according to claim 16, where the water-insoluble stabilising colloid according to claim 2 is prepared.

18. Dispersion obtainable by the process according to at least one of claims 1 and/or 8 to 13.

19. Dispersion according to claim 18, where the water-insoluble stabilising colloid according to claim 2 is prepared.

20. Water-redispersible polymer powder obtainable by the process according to at least one of claims 14 to 15.

21. Water-redispersible polymer powder according to claim 20, where the water-insoluble stabilising colloid according to claim 2 is prepared.

22. Use of the water-insoluble stabilising colloid prepared according to claim 16 or 17 for the stabilising of polymer dispersions, silane and/or siloxane dispersion, colophonic acid dispersions, colophonium and colophonium ester dispersions, as spraying aids and/or for the encapsulation of organic and/or inorganic compounds.

23. Use of the dispersion according to claim 18 or 19 and the water-redispersible polymer powder according to claim 20 or 21 as organic polymeric binder in minerally setting systems, more particularly in hydraulically, latent-hydraulically and non-hydraulically setting systems, with the latter reacting under the influence of air and water, in non-minerally setting systems, more particularly cement-free plasters, paints, such as emulsion paints, printing inks and/or ink-jet inks, textiles, adhesives, as binders for wood, nonwovens, paper and paper making, and/or as binders of moulding compounds and moulded bodies.

24. Use according to claim 23, **characterised in that** the minerally setting systems are ceramic tile adhesives, thermal insulation mortars, levelling compounds, repair mortars, gypsum and/or lime and/or cement plasters, tile grouts, sealing mortars, trowelling compounds, wallpaper pastes, parquet adhesives, powder coatings, and/or cement-based compositions for oil wells, natural gas wells, and/or geothermal boreholes.

## Revendications

1. Procédé de production de dispersions aqueuses qui sont stabilisées avec un colloïde de stabilisation insoluble dans l'eau, **caractérisé en ce que**
a) dans une première étape, un colloïde de stabilisation insoluble dans l'eau est produit, dans lequel celui-ci est produit, par rapport à la quantité de monomère utilisé pour la production du colloïde de stabilisation, dans de l'eau au moyen d'une polymérisation radicalaire de
a1) 3 à 50 % en poids d'au moins un monomère insaturé d'un point de vue oléfinique, contenant au moins un groupe sulfate et/ou sulfonate qui peut éventuellement être protoné,
a2) 20 à 97 % en poids d'au moins un monomère insaturé d'un point de vue oléfinique présentant une solubilité dans l'eau à 20 °C inférieure à 50 g/l, et
a3) jusqu'à 30 % en poids d'au moins un monomère insaturé d'un point de vue oléfinique présentant une solubilité dans l'eau à 20 °C supérieure à 50 g/l, suivie de
b) l'addition d'au moins un autre monomère insaturé d'un point de vue oléfinique et d'au moins un initiateur, dans lequel par polymérisation radicalaire de l'autre monomère insaturé d'un point de vue oléfinique, une dispersion aqueuse est obtenue, sur laquelle
c) éventuellement une réduction de monomère résiduel est réalisée, dans lequel celle-ci est effectuée par polymérisation des monomères résiduels et/ou par élimination physique des monomères résiduels et éventuellement d'autres composants organiques volatils par introduction de vapeur et/ou de gaz.

2. Procédé selon la revendication 1, **caractérisé en ce que** le colloïde de stabilisation insoluble dans l'eau est produit, par rapport à la quantité de monomère utilisé pour la production du colloïde de stabilisation, au moyen d'une polymérisation radicalaire de
a1) 5 à 30 % en poids d'au moins un monomère insaturé d'un point de vue oléfinique, contenant au moins un groupe sulfate et/ou sulfonate qui peut éventuellement être protoné,
a2) 50 à 95 % en poids d'au moins un monomère insaturé d'un point de vue oléfinique présentant une solubilité dans l'eau à 20 °C inférieure à 50 g/l, et
a3) jusqu'à 20 % en poids d'au moins un monomère insaturé d'un point de vue oléfinique présentant une solubilité dans l'eau à 20 °C supérieure à 50 g/l.

3. Procédé selon la revendication 1 ou 2, **caractérisé en ce que** la taille de particule du colloïde de stabilisation insoluble dans l'eau, mesurée par dispersion de lumière et exprimée en tant que moyenne volumétrique est de 50 à 2000 nm, en particulier de 80 à 1000 nm.

4. Procédé selon au moins l'une des revendications 1 à 3, **caractérisé en ce que** l'au moins un monomère insaturé d'un point de vue oléfinique, contenant au moins un groupe sulfate et/ou sulfonate est un monomère (méth)acrylate, (méth)acrylamide et/ou vinylique.

5. Procédé selon la revendication 4, **caractérisé en ce que** le monomère (méth)acrylate est un sulfo-alkylester d'acide (méth)acrylique, le monomère (méth)acrylamide est l'acide sulfonique de 2-acrylamido-2-méthylpropane et le monomère vinylique est l'acide styrène-sulfonique, l'acide vinylsulfonique et/ou l'acide allylsulfonique, et/ou leurs sels alcalins, alcalinoterreux et/ou d'ammonium.

6. Procédé selon au moins l'une des revendications 1 à 5, **caractérisé en ce que**, pour la production du colloïde de stabilisation, au moins un monomère insaturé d'un point de vue oléfinique est copolymérisé avec un autre groupe réactif.

7. Procédé selon la revendication 6, **caractérisé en ce que** le groupe réactif du monomère comportant un autre groupe réactif est un groupe époxy, épihalogénohydrine, amine, ammonium, hydroxyle, aldéhyde, cétone, anhydride d'acide, acéto-acétonate, carboxyle, thiol, alcoxysilane, silanol, glycidyle, N-méthylol, acide sulfonique, amide, amidine, imine, ester et/ou carbonyle.

8. Procédé de production de la dispersion selon au moins l'une des revendications 1 à 7, **caractérisé en ce que** d'autres monomères insaturés d'un point de vue oléfinique sont convertis en présence du colloïde de stabilisation insoluble dans l'eau au moyen d'une polymérisation radicalaire en émulsion, suspension et/ou micro-émulsion dans un procédé continu, à apport de monomère et/ou discontinu, en homo- ou copolymères, dans lequel les monomères dans le procédé d'apport de monomères peuvent également être ajoutés sous la forme d'une pré-émulsion.

9. Procédé selon la revendication 1 ou 8, **caractérisé en ce que** comme les autres monomères insaturés d'un point de vue oléfinique sont utilisés des esters vinyliques, d'éthylène, des esters d'acide (méth)acrylique et/ou (méth)acrylamide, de l'acide maléique et ses esters, du styrène et des dérivés de styrène et/ou du butadiène.

10. Procédé selon au moins l'une des revendications 1, 8 et/ou 9, **caractérisé en ce que**, pour la production de la dispersion, on utilise 2 à 50 % en poids, en particulier 5 à 40 % en poids, par rapport à la teneur en solide de la dispersion obtenue, de colloïde de stabilisation insoluble dans l'eau.

11. Procédé selon au moins l'une des revendications 1 et/ou 8 à 10, **caractérisé en ce que** la taille de particule de la dispersion obtenue, mesurée au moyen de la dispersion de lumière et exprimée en tant que moyenne volumétrique, est de 0,1 à 5 µm, en particulier de 0,2 à 2 µm.

12. Procédé selon au moins l'une des revendications 1 et/ou 8 à 11, **caractérisé en ce que** la température de transition vitreuse Tg, mesurée comme température médiane selon la norme ASTM D3418-82, du colloïde de stabilisation insoluble dans l'eau utilisé pour la stabilisation de la dispersion, se situe entre 0 et 80 °C, en particulier entre 5 et 70 °C, et la température de transition vitreuse Tg de l'homo- ou copolymère produit ensuite se situe entre -50 et +80 °C, en particulier entre -40 et +50 °C.

13. Procédé selon au moins l'une des revendications 1 et/ou 8 à 12, **caractérisé en ce que** la teneur en solide de la dispersion est de 30 à 75 % en poids, en particulier de 40 à 70 % en poids.

14. Procédé de production de poudre de polymère redispersible dans l'eau, **caractérisé en ce que** la dispersion obtenue selon au moins l'une des revendications 1 et/ou 8 à 13, avec éventuellement des polymères solubles dans l'eau et/ou d'autres additifs, est séchée par séchage par pulvérisation, lyophilisation, séchage en lit fluidisé, séchage en cylindre ou séchage rapide.

15. Procédé selon la revendication 14, **caractérisé en ce que** les polymères solubles dans l'eau sont un alcool polyvinylique partiellement hydrolysé et/ou une polyvinylpyrrolidone partiellement hydrolysée et les autres additifs sont des dispersions de polymère, des agents à effet hydrophobe tels que des acides gras et leurs sels et esters, des silanes et/ou siloxanes, des agents porogènes, des agents de réticulation, des agents anti-mousse, des auxiliaires filmogènes, des agents accélérateurs de prise et de solidification, des agents retardateurs de prise, des épaississants, des dispersants, des fluidifiants du ciment, des polycarboxylates, des éthers de polycarboxylate, des polyacrylamides, des agents de rétention d'eau, des fibres de cellulose et des éthers de cellulose, des éthers d'amidon, des éthers de guar, des additifs pour la réduction de l'efflorescence, de la sédimentation et/ou de la flottation, des agents de charge et/ou des additifs pour la réduction du blocage de poudre et sont ajoutés avant, pendant et/ou après le séchage.

16. Colloïde de stabilisation insoluble dans l'eau, pouvant être obtenu par le procédé selon au moins l'une des revendications 1, étape a), à 8.

17. Colloïde de stabilisation insoluble dans l'eau selon la revendication 16, dans lequel le colloïde de stabilisation insoluble dans l'eau est produit selon la revendication 2.

18. Dispersion pouvant être obtenue par le procédé selon au moins l'une des revendications 1 et/ou 8 à 13.

19. Dispersion selon la revendication 18, dans laquelle le colloïde de stabilisation insoluble dans l'eau est produit selon la revendication 2.

20. Poudre de polymère redispersible dans l'eau, pouvant être obtenue par le procédé selon au moins l'une des revendications 14 à 15.

21. Poudre de polymère redispersible dans l'eau selon la revendication 20, dans laquelle le colloïde de stabilisation insoluble dans l'eau est produit selon la revendication 2.

22. Utilisation du colloïde de stabilisation insoluble dans l'eau, produit selon la revendication 16 ou 17, pour la stabilisation de dispersions de polymère, de dispersion de silane et/ou de siloxane, de dispersions d'acide résinique, de dispersions de colophane et de dispersions d'ester de colophane, comme auxiliaires de pulvérisation et/ou pour l'encapsulation de composés organiques et/ou inorganiques.

23. Utilisation de la dispersion selon la revendication 18 ou 19 et de la poudre de polymère redispersible dans l'eau selon la revendication 20 ou 21 comme liant polymère organique dans des systèmes à prise minérale, en particulier, des systèmes à prise hydraulique, à prise latente-hydraulique et à prise non hydraulique, dans laquelle ces derniers réagissent sous l'effet de l'air et de l'eau, dans des systèmes à prise non minérale, en particulier des enduits sans ciment, des peintures telles que des peintures à dispersion, des encres d'impression et/ou des encres pour jet d'encre, des textiles, des adhésifs, des liants pour le bois, des non-tissés, du papier et de la fabrication du papier et/ou comme liants de matières à comprimer et de pièces moulées.

24. Utilisation selon la revendication 23, **caractérisée en ce que** les systèmes à prise minérale sont des adhésifs de carrelage, des mortiers de protection thermique, des mastics de ragréage, des mortiers de réparation, des enduits à base de plâtre et/ou de chaux et/ou de ciment, des mortiers de jointement, des badigeons d'étanchéité, des mastics, des colles pour papier peint, des adhésifs pour parquet, des peintures en poudre et/ou des matières à base de ciment pour trous de forage de pétrole, de gaz naturel et/ou de géothermie.
